# EUROPÄISCHE PATENTSCHRIFT

(11) **EP 2 559 569 B1**
(45) Veröffentlichungstag und Bekanntmachung des Hinweises auf die Patenterteilung: **06.03.2024**
(21) Anmeldenummer: 12005883.9
(22) Anmeldetag: 15.08.2012
(51) Int. Cl.: B60B 27/02, F16D 41/36, B60B 27/04

(54) **Nabe**
Collar
Moyeu

(30) Priorität: 16.08.2011 DE 102011110199
(43) Veröffentlichungstag der Anmeldung: 20.02.2013
(73) Patentinhaber: DT Swiss AG, 2504 Biel (CH)
(72) Erfinder: Spahr, Stefan, 2543 Lengnau (CH); Walthert, Martin, 3270 Aarberg (CH)
(74) Vertreter: BSB Patentanwälte Schütte & Engelen Partnerschaft mbB

(56) Entgegenhaltungen:
- EP-A1- 2 221 191
- DE-A1- 19 731 451
- DE-A1-102004 004 961
- DE-A1-102009 006 101
- US-A- 5 964 332

## Beschreibung

Die vorliegende Erfindung betrifft eine Nabe für wenigstens teilweise muskelbetriebene Fahrzeuge und insbesondere Zweiräder mit einer Nabenachse, einem Nabenkörper, einem Rotor und einem Zahnscheibenfreilauf. An dem Rotor der Nabe kann eine Vielzahl von Ritzeln angeordnet werden, um unterschiedlichste Übersetzungen zu ermöglichen. Dadurch kann ein optimaler Fahrstil z. B. bei steilen Bergauf- oder Bergabfahrten ermöglicht werden. Durch den Freilauf kann der Fahrer das Fahrzeug auch ohne Tretbewegung laufen lassen.

Naben für Fahrräder werden insbesondere im sportlichen Bereich und im semiprofessionellen und professionellen Bereich hohen und höchsten Belastungen ausgesetzt. Ein generelles Problem bei Freiläufen von Fahrradnaben ist die Sicherstellung der Funktion bei unterschiedlichsten Drehzahlen. Sowohl bei sehr geringen Geschwindigkeiten als auch bei sehr hohen Geschwindigkeiten muss eine ordnungsgemäße Funktion gewährleistet werden.

Weiterhin muss der Freilauf einer Fahrradnabe zuverlässig Drehmomente von einer Stärke übertragen können, wie sie im Sportwagenbereich auftreten. Dabei können die auftretenden Flächenpressungen bei Fahrrädern sogar noch größer werden, da die Abmessungen kleiner sind.

Der Freilauf muss beim Aufbringen von Antriebskraft sehr schnell und zuverlässig einen Kraftschluss herstellen, während der Freilauf andererseits nur eine geringe Reibung beim Rückwärtstreten oder Nichttreten aufweisen soll. Bei Bergauffahrten oder z. B. starken Beschleunigungen wirken große dynamische Belastungen auf die Nabe ein, sodass die Einzelteile der Nabe und die Nabe insgesamt dynamisch betrachtet werden müssen. Die Achse biegt sich beispielsweise bei hohen Belastungen durch, auch wenn die Achse durch konstruktive Maßnahmen und durch die eingesetzten Materialien möglichst starr ausgebildet wird.

Im Stand der Technik sind unterschiedliche Freiläufe bekannt geworden. Eine in der Montage und bei der Wartung einfach zu handhabende Hinterradnabe ist mit der DE 198 47 673 A1 bekannt geworden. Bei dieser Nabe erfolgt die Drehmomentübertragung über zwei Zahnscheiben, die an den aneinander anliegenden Seitenflächen über axiale und ineinander greifende Verzahnungen verfügen. In Antriebsrichtung wird das aufgebrachte Drehmoment zuverlässig übertragen, während die Zahnscheiben sich bei der umgekehrten Drehrichtung axial auseinander schieben und so einen Freilauf ermöglichen.

Auch die DE 10 2009 006 101 A1 offenbart eine Nabe mit einem solchen Zahnscheibenfreilauf. Dabei drücken Federn von hinten gegen die Zahnscheiben, um diese zur Kraftübertragung in Eingriff zu bringen.

Die De 10 2004 004 961 B4 offenbart ebenfalls eine Nabe mit einem Zahnscheibenfreilauf, wobei zur Erhöhung der Steifigkeit die Nabenachse im Bereich des Freilauflagers deutlich verdickt ist. Eine solche Nabe weist durch die Verdickung ein höheres Gewicht auf und erfordert einen höheren Aufwand bei der Fertigung. Außerdem kann trotz der Verdickung der Nabenachse ein Durchrutschen des Freilaufes nicht immer zuverlässig verhindert werden.

Die EP 2 221 191 A1 offenbart eine Fahrradnabenbaugruppe mit einer integrierten Freilauffunktion und einer nabenseitigen schmalen Zahnscheibe und mit einer hohlen Achse aus Faserverbundwerkstoff, wobei auf der Achse ein Wälzlager positioniert ist und zwischen dem Wälzlager und der Achse eine von dem Ausfallendengegenstück separate Metallisierung aufgebracht ist. Diese Fahrradnabenbaugruppe ermöglicht ein besonders leichtes Gewicht.

Die US 5,964,332 offenbart eine Freilaufnabe für ein Fahrrad, bei der auf einem Rotor eine Mehrzahl an Ritzeln angeordnet ist. Eine mit dem Rotor einstückig ausgebildete Eingangswelle erstreckt sich in das mit einem großen Innendurchmesser ausgebildete Nabengehäuse. Auf der Außenoberfläche der Eingangswelle ist eine spiralförmige Verzahnung ausgebildet, in die ein Antriebsring eingreift und durch eine Drehbewegung axial beweglich ist. Der Antriebsring weist axial außen eine Axialverzahnung auf, die mit einer Axialverzahnung eines im Inneren des Nabengehäuses angeordneten angetriebenen Ringes im Eingriff ist, wenn sich der Antriebsring durch die Federkraft einer Druckfeder bedingt axial außen befindet. Radial außen ist der angetriebene Ring mit dem Nabengehäuse drehfest gekoppelt. Über die Axialverzahnungen an dem angetriebenen Ring und dem Antriebsring wird ein Freilauf zur Verfügung gestellt. Der Aufbau der Freilaufnabe ist kompliziert und erfordert eine hohe Anzahl präzise gefertigter Bauteile, die alle im Inneren des Nabengehäuses montiert werden müssen.

Mit der DE 10 2007 030 190 A1 ist eine Weiterentwicklung der Nabe nach der DE 198 47 673 A1 bekannt geworden, die über einen Zahnscheibenfreilauf verfügt, wobei die Zahnscheiben einen L- oder U-förmigen Querschnitt aufweisen. Dadurch kann das relativ hohe Gewicht der Zahnscheiben und somit das Gesamtgewicht der Nabe reduziert werden.

Der angeführte Stand der Technik funktioniert an sich zuverlässig. Es gibt Tendenzen, die Außendurchmesser aus Gewichts- und Stabilitätsgründen zu vergrößern. Außerdem wird generell versucht, noch weiter Gewicht einzusparen. Bei Versuchen mit anderen Außenabmessungen wurde aber eine verringerte Zuverlässigkeit festgestellt.

Es ist deshalb die Aufgabe der vorliegenden Erfindung, eine Nabe zur Verfügung zu stellen, welche eine noch zuverlässige Betriebsweise erlaubt.

Diese Aufgabe wird durch eine erfindungsgemäße Nabe mit den Merkmalen des Anspruchs 1 gelöst. Bevorzugte Weiterbildungen der Erfindung sind Gegenstand der Unteransprüche. Weitere Vorteile und Merkmale der vorliegenden Erfindung ergeben sich aus der allgemeinen Beschreibung und aus der Beschreibung der Ausführungsbeispiele.

Eine erfindungsgemäße Nabe gemäß Anspruch 1 ist für wenigstens teilweise muskelbetriebene Fahrzeuge und insbesondere Zweiräder vorgesehen und weist eine Nabenachse, einen Nabenkörper und einen Rotor sowie einen Zahnscheibenfreilauf auf. Der Zahnscheibenfreilauf weist zwei miteinander zusammenwirkende Eingriffskomponenten mit jeweils wenigstens einer Axialverzahnung auf. Die Eingriffskomponenten werden über wenigstens eine Vorbelastungseinrichtung in Eingriffsstellung vorbelastet. Die eine Eingriffskomponente ist wenigstens in Antriebsrichtung drehfest und axial verschiebbar mit dem Nabenkörper gekoppelt. Die andere Eingriffskomponente ist drehfest an dem Rotor vorgesehen, um in der Eingriffsstellung der beiden Eingriffskomponenten eine Drehbewegung von dem Rotor auf den Nabenkörper zu übertragen. Wenigstens eine der beiden Eingriffskomponenten ist als Zahnscheibe ausgebildet und mit der Axialverzahnung versehen. Die Vorbelastungseinrichtung ist wenigstens teilweise im Inneren der Zahnscheibe angeordnet. Die Zahnscheibe ist Antriebsrichtung drehfest mit dem Nabenkörper gekoppelt und ist mittelbar oder unmittelbar an oder in dem Nabenkörper axial verschiebbar aufgenommen. Die Zahnscheibe weist eine axiale Breite auf, die wenigstens so groß ist wie der halbe Außenradius der Axialverzahnung.

Die erfindungsgemäße Nabe gemäß Anspruch 1 hat viele Vorteile. Ein erheblicher Vorteil besteht in der konstruktiven Verknüpfung des Außenradius der Axialverzahnung mit der axialen Breite der Zahnscheibe. Dadurch, dass die axiale Breite der Zahnscheibe wenigstens halb so groß ist wie der halbe Außenradius der Axialverzahnung, also wenigstens einem Viertel des Außendurchmessers der Axialverzahnung entspricht, wird eine sichere axiale Führung der Zahnscheibe in dem Nabenkörper gewährleistet.

Die in Antriebsrichtung drehfest mit dem Nabenkörper gekoppelte und insbesondere mittelbar oder unmittelbar an oder in dem Nabenkörper aufgenommene oder angeordnete Zahnscheibe ist axial verschiebbar vorgesehen. Dadurch, dass die axiale Breite der Zahnscheibe mit dem Außenradius der Axialverzahnung verknüpft wird, kann konstruktiv eine zuverlässige Funktion der Nabe sichergestellt werden. Überraschenderweise hat sich gezeigt, dass ab etwa einer axialen Breite, die dem halben Außenradius der Axialverzahnung entspricht, sich eine besonders zuverlässige Funktion der Nabe ergibt. Wie sich bei intensiven Versuchen und Untersuchungen herausgestellt hat, kann es bei Zahnscheiben mit einer geringen axialen Breite zu Verkantungen in Betrieb kommen, sodass die Zahnscheibe nicht wie vorgesehen funktioniert.

Die Zahnscheibe kann eine axiale Breite größer als 6,5 mm aufweisen.

Eine axiale Breite größer als 6,5 mm führt zu einem noch sicheren Betrieb und einer zuverlässigen Funktion. Es hat sich herausgestellt, dass bei den bei Fahrradnaben vorliegenden Abmessungen eine axiale Breite von 6,5 mm auch bei vergrößerten Außendurchmessern zu einem zuverlässigen Betrieb führt.

In bevorzugten Weiterbildungen beträgt die axiale Breite der Zahnscheibe 6,7 mm und insbesondere 6,9 mm. Je nach Ausgestaltung der Nabe und der verwendeten Materialien ist eine axiale Breite von 7 mm oder sogar 7,5 mm oder mehr sinnvoll und vorteilhaft. So kann eine Optimierung der Nabe erfolgen, bei der unter Wahrung höchster Betriebssicherheit ein geringes Gewicht erreicht und ein gutes Ansprechverhalten eingestellt werden kann.

Ein erheblicher Vorteil aller erfindungsgemäßen Naben ist, dass eine solche Nabe auch bei hochdynamischen Belastungen zuverlässig funktioniert. Der Freilauf unterliegt bei stark wechselnden Belastungen extremen Anforderungen, um jederzeit das anliegende Drehmoment sicher zu übertragen. Dazu muss der Freilauf sehr schnell auf die unterschiedlichen Anforderungen reagieren. Das wird durch eine erfindungsgemäße Konstruktion gewährleistet. Auch ohne besonders hohe Andruckkräfte der Vorbelastungseinrichtung wird eine zuverlässige Freilauffunktion gewährleistet. Weiterhin erlaubt der Freilauf einer erfindungsgemäßen Nabe eine hochdynamische Arbeitsweise des Freilaufs.

Es hat sich auch herausgestellt, dass eine Zahnscheibe mit einer geringen Breite sich im dauernden Betrieb bei hohen Belastungen in die die Zahnscheibe aufnehmende Eingriffskomponente eindrücken kann, da die wirkenden Flächenpressungen enorm werden können. Die beispielsweise mit einer radialen Außenverzahnung in einer radialen Innenverzahnung der Eingriffskomponente aufgenommene Zahnscheibe überträgt das Antriebsdrehmoment auf die Eingriffskomponente oder bekommt es von der Eingriffskomponente aus übertragen.

Die zwischen Eingriffskomponente und Zahnscheibe wirkenden Flächenpressungen erfordern hochfeste Materialien, um eine Beschädigung der Kontaktflächen zu vermeiden. Dennoch kann es bei zu geringen Breiten der Zahnscheibe zu einer Überlastung kommen, die zu örtlichen Unebenheiten der Kontaktflächen führen. Dadurch wird wiederum die axiale Beweglichkeit der Zahnscheibe gegenüber der Eingriffskomponente behindert, was zu einer Reduktion des dynamischen Ansprechverhaltens oder sogar Fehlfunktionen führt. Durch eine erfindungsgemäße Nabe wird die wirkende Flächenpressung verringert. Dadurch wird die Standzeit erhöht und es kann auch auf Materialien zurückgegriffen werden, die eine geringere Festigkeit aufweisen, was die Herstellkosten verringert.

Die erfindungsgemäße Nabe stellt die Funktionalität sicher, da eine axiale Verschiebbarkeit der Zahnscheibe zu der Eingriffskomponente mit geringer Reibung und geringem Widerstand gewährleistet wird. Dadurch kann in Verbindung mit dem geringen Gewicht der Zahnscheibe eine hochdynamische Funktion sichergestellt werden, die wichtig ist, da ein durchrutschender Freilauf zu erheblichen Gefährdungen führen kann.

Außerdem biegt sich bei hohen Belastungen beispielsweise die Achse durch. Das Durchbiegen der Achse bewirkt ein Verkippen der Arbeitsposition, welches durch eine erfindungsgemäße Nabe sicher und schnell ausgeglichen werden kann. Gleichzeitig wird ein Verkanten der Zahnscheibe in der Eingriffskomponente bei der dynamischen Bewegungsabfolge vermieden.

Im Betrieb treten oftmals hochdynamische Belastungen auf, die nicht vorherberechnet oder geplant werden können. Wenn beispielsweise beim Fahren mit einem Rennrad eine Unebenheit oder ein Stein auf der Fahrbahn überfahren wird, führt dies zu kurzen starken Belastungen, die sich bis in die Nabe hinein auswirken. Dies gilt insbesondere auch, wenn eine erfindungsgemäße Nabe in einem Mountain-Bike oder dergleichen eingesetzt wird und beim Downhill-Fahren Steine überfahren werden oder Sprünge durchführt werden. Bei gleichzeitigem oder nur kurz zeitversetztem Antreten sind die Anforderungen an die Nabe und den Freilauf extrem. Solchen hochdynamischen Belastungen kann der Freilauf einer erfindungsgemäßen Nabe standhalten.

Insgesamt ist das Verhalten einer Freilaufnabe sehr komplex. Mehr Material oder Höhe oder Breite nützt nicht generell, um höheren Anforderungen zu genügen. Werden beispielsweise die Zähne der Axialverzahnung in radialer Richtung vergrößert, so führt dies zu einer erheblich größeren Reibung im Freilaufbetrieb. Dann kann ein Rückwärtstreten zu einem Durchhängen des Obertrums führen. Außerdem wird die dynamische Wirksamkeit durch das höhere Gewicht verringert.

Vorzugsweise kann eine der beiden Eingriffskomponenten als Zahnscheibe mit der Axialverzahnung ausgebildet sein und eine axiale Breite aufweisen, die wenigstens doppelt so groß ist wie eine radiale Erstreckung der Zähne der Axialverzahnung. Vorzugsweise beträgt die axiale Breite wenigstens das 2,25-fache oder 2,5-fache oder sogar das 3-fache der radialen Erstreckung der Zähne der Axialverzahnung. Diese Weiterbildungen sind vorteilhaft und ermöglichen einen zuverlässigen Betrieb. Es hat sich dabei herausgestellt, dass eine axiale Breite der Zahnscheibe vorteilhaft ist, die wenigstens doppelt so groß oder größer ist als eine radiale Erstreckung der Zähne der Axialverzahnung. Das ist insofern überraschend, da zur Übertragung des Antriebsmoments die Zähne der Axialverzahnung dienen. Ein wesentlicher Aspekt der Zuverlässigkeit ergibt sich aber durch die axiale Breite der Zahnscheibe, die ja unabhängig von der Axialverzahnung ist. Um eine perfekte Übertragung des Antriebsmoments zu gewährleisten und um einen zuverlässigen Betrieb des Zahnscheibenfreilaufs zu sichern, ist es von Vorteil, wenn die Zahnscheibe wenigstens eine entsprechende doppelt so große axiale Breite aufweist.

In allen Ausgestaltungen ist eine Eingriffskomponente axial verschiebbar und wenigstens in Antriebsrichtung drehfest mittelbar oder unmittelbar mit dem Nabenkörper gekoppelt. Insbesondere ist diese Eingriffskomponente direkt oder indirekt an dem Nabenkörper aufgenommen. Die andere Eingriffskomponente ist drehfest an dem Rotor vorgesehen und kann mittelbar oder unmittelbar an dem Rotor aufgenommen sein.

In bevorzugten Weiterbildungen aller zuvor beschriebenen Ausgestaltungen ist vorzugsweise eine doppelte axiale Breite der Zahnscheibe wenigstens so groß wie ein Außenradius der Zahnscheibe. Möglich und bevorzugt ist es auch, dass die doppelte axiale Breite der Zahnscheibe wenigstens 10 % größer als ein Außenradius der Zahnscheibe ist.

Durch solche Maßnahmen können beispielsweise andere Toleranzen verringert werden, um so einen kostengünstigen Aufbau bei gleicher oder gesteigerter Zuverlässigkeit zu ermöglichen.

Vorzugsweise ist das Verhältnis eines lichten Innendurchmessers der Zahnscheibe zu der axialen Breite der Zahnscheibe kleiner als 3. Umgekehrt betrachtet ist das Verhältnis der axialen Breite der Zahnscheibe zu dem lichten Innendurchmesser vorzugsweise größer als ein Drittel. Auch dieses Merkmal stellt darauf ab, dass eine größere axiale Breite der Zahnscheibe vorteilhaft ist. Grundsätzlich wird aus Gewichtsgründen der lichte Innendurchmesser relativ groß gewählt werden. Bei einem Innendurchmesser von beispielsweise 19,5 mm beträgt die axiale Breite der Zahnscheibe dann vorzugsweise wenigstens 6,5 mm.

In bevorzugten Weiterbildungen aller Ausgestaltungen ist ein Querschnitt der Zahnscheibe vorzugsweise L-förmig gestaltet. Dabei ist an dem radialen Schenkel die Axialverzahnung vorgesehen. Eine derart ausgestaltete Zahnscheibe besteht im Wesentlichen aus einer Lochscheibe, an die sich eine Ringhülse anschließt. Die Axialverzahnung ist dabei an de Lochscheibe vorgesehen.

Vorzugsweise weist die Zahnscheibe eine unrunde Außenkontur auf, die in einer entsprechend unrunden Innenkontur eines Nabenbauteils drehfest und axial verschiebbar aufgenommen ist. Dabei kann das Nabenbauteil beispielsweise als Aufnahmering ausgebildet sein, der wiederum in den Nabenkörper eingesetzt und insbesondere eingeschraubt ist. Möglich ist es aber auch, dass der Aufnahmering in dem Nabenkörper eingeklebt ist oder sonst wie dort befestigt wird. Die Zahnscheibe kann mit der unrunden Außenkontur auch direkt in eine unrunde Innenkontur des Nabenkörpers eingesetzt werden. In einem solchen Fall entspricht das Nabenbauteil dem Nabenkörper.

Die Anordnung der Zahnscheibe mit einer unrunden Außenkontur in einer entsprechend unrunden Innenkontur eines Nabenbauteils ermöglicht auf eine einfache Art und Weise eine axiale Verschiebbarkeit, während andererseits eine drehfeste Anordnung der Bauteile gegeneinander sichergestellt wird.

Vorzugsweise weist die Zahnscheibe eine Radialverzahnung auf. Bei dieser Ausgestaltung ist die unrunde Außenkontur als Radialverzahnung ausgebildet. Bevorzugt ist auch eine sonstige unrunde Außenkontur, die beispielsweise als Polygon ausgeführt sein kann.

In allen Ausgestaltungen ist es erfindungsgemäß, dass die Vorbelastungseinrichtung wenigstens teilweise im Inneren der Zahnscheibe angeordnet ist. Besonders bevorzugt ist die Vorbelastungseinrichtung bzw. wenigstens eine Vorbelastungseinrichtung als Feder und insbesondere als Spiralfeder oder Ringfeder ausgeführt. Durch eine wenigstens teilweise im Inneren der Zahnscheibe angeordnete Vorbelastungseinrichtung benötigt ein derart ausgestalteter Zahnscheibenfreilauf eine insgesamt geringere axiale Breite. Das ist möglich, obwohl eine vergrößerte axiale Breite der Zahnscheibe vorliegt. Insgesamt ist die axiale Gesamtbreite typischer Fahrradnaben vordefiniert und insbesondere begrenzt, da eine solche Nabe in standardisierte Komponenten hineinpassen muss. Da insbesondere bei Hinterradnaben der Speichenwinkel auf der Rotorseite wichtig ist, kann so trotz einer größeren axialen Breite der Zahnscheibe eine insgesamt geringere oder gleichbleibende axiale Breite des Zahnscheibenfreilaufs erzielt werden.

Vorteilhafterweise drückt die Vorbelastungseinrichtung in axialer Richtung gegen den radialen Schenkel der Zahnscheibe, um die Zahnscheibe in Eingriff mit der anderen Eingriffskomponente vorzubelasten.

Es ist möglich, dass eine Axialverzahnung einer Eingriffskomponente als Stirnverzahnung an dem Rotor vorgesehen ist. Bei einer solchen Ausgestaltung wirkt eine Zahnscheibe mit der Stirnverzahnung an dem Rotor zusammen, um das Antriebsdrehmoment zu übertragen.

Möglich ist es aber auch, dass die andere Eingriffkomponente auch als Zahnscheibe ausgebildet und in dem Rotor drehfest und axial verschiebbar aufgenommen ist. Dann werden vorzugsweise beide Zahnscheiben durch jeweils eine Vorbelastungseinrichtung in axialer Richtung aufeinander gedrückt, sodass eine schwimmende Lagerung der Zahnscheiben erzielt wird.

In allen Ausgestaltungen ist es bevorzugt, dass der Außenradius der Axialverzahnung wenigstens 14 mm beträgt. Vorzugsweise beträgt die axiale Breite der Zahnscheibe wenigstens 7 mm.

In allen Ausgestaltungen besteht wenigstens eine Zahnscheibe aus Stahl. Der Nabenkörper kann aus einem oder mehreren Materialien bestehen und beispielsweise einstückig gefertigt sein oder aber aus mehreren - auch separaten - Teilen zusammengesetzt sein.

Vorzugsweise besteht der Nabenkörper wenigstens teilweise aus wenigstens einem leichten Material wie Leichtmetall oder Faserverbundwerkstoff. Die Nabenachse kann auch aus Metall und insbesondere einem Leichtmetall bestehen und kann gegebenenfalls auch aus einem Faserverbundwerkstoff gefertigt sein.

In allen Ausgestaltungen ist es möglich, dass die Nabenachse im Bereich des Rotors und/oder wenigstens einer Axialverzahnung eine Verdickung zur Versteifung aufweist. Möglich ist auch ein vergrößerter Durchmesser der Nabenachse im Bereich des Rotors und/oder wenigstens einer Axialverzahnung. Das kann zur Erhöhung der Betriebssicherheit beitragen.

Weitere Vorteile und Merkmale der vorliegenden Erfindung ergeben sich aus der Beschreibung von Ausführungsbeispielen, die mit Bezug auf die beiliegenden Figuren im Folgenden erläutert werden.

In den Figuren zeigen:
- Fig. 1: eine schematische Seitenansicht eines mit einer erfindungsgemäßen Nabe ausgerüsteten Rennrades;
- Fig. 2: eine schematische Seitenansicht eines mit einer erfindungsgemäßen Nabe ausgerüsteten Mountain-Bikes;
- Fig. 3: einen schematischen Querschnitt durch eine erste erfindungsgemäße Nabe;
- Fig. 4: ein vergrößertes Detail aus Fig. 3;
- Fig. 5: eine Explosionsdarstellung des Zahnscheibenfreilaufs der Nabe nach Fig. 3; und
- Fig. 6: einen weiteren schematischen Querschnitt durch eine Nabe eines weiteren Ausführungsbeispiels.

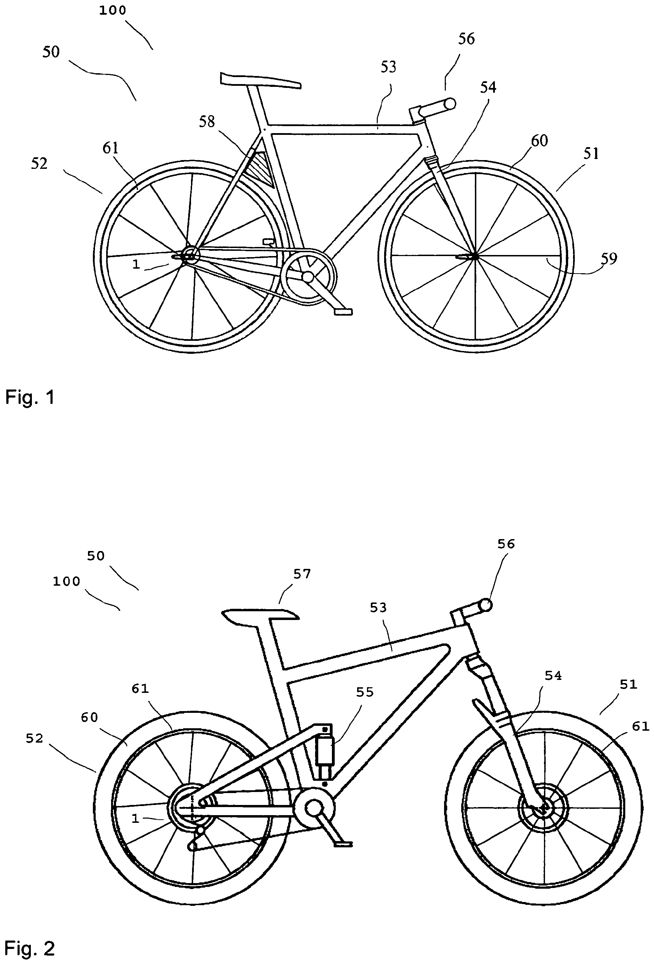

In Figur 1 ist ein Fahrzeug 100 in einer schematischen Seitenansicht abgebildet, welches hier als Zweirad 50 und insbesondere als Rennrad ausgeführt ist. Das Fahrrad 50 ist wenigstens teilweise muskelbetrieben und kann über einen elektrischen Hilfsantrieb verfügen.

Das Rennrad ist in einer stark schematischen Seitenansicht abgebildet und weist ein Vorderrad 51, ein Hinterrad 52 und einen Rahmen 53 auf. Ein Lenker 56 dient zur Steuerung und kann unterschiedlich ausgebildet sein. Neben einer Ausgestaltung als Rennlenker sind auch andere bekannter Ausgestaltungen möglich.

Unterhalb des Sattels 57 kann eine Batterie 58 vorgesehen sein, die insbesondere bei elektrounterstützten Zweirädern Anwendung findet. Grundsätzlich kann eine solche Batterie 58 auch an anderen Stellen am Rahmen angebracht sein oder in den Rahmen integriert oder sonst wo untergebracht sein.

Bei dem Fahrrad gemäß Figur 1 ist der Reifen 60 als schlauchloser Reifen aufgeführt und wird beispielsweise auf die Felge 61 aufgeklebt. Bei dem Vorderrad 51 und dem Hinterrad 52 ist die Felge 61 jeweils über Speichen 59 mit der Nabe verbunden.

Das Hinterrad 52 verfügt über eine erfindungsgemäße Nabe 1 als Hinterradnabe.

In Figur 2 ist ein Mountainbike als Fahrrad 50 in einer stark schematisierten Seitenansicht abgebildet, welches über ein Vorderrad 51, ein Hinterrad 52, einen Rahmen 53, eine gefederte Vordergabel 54 und einen Hinterraddämpfer 55 verfügt. In diesem Ausführungsbeispiel sind Scheibenbremsen vorgesehen. An dem Hinterrad 52 ist eine erfindungsgemäße Nabe 1 vorgesehen.

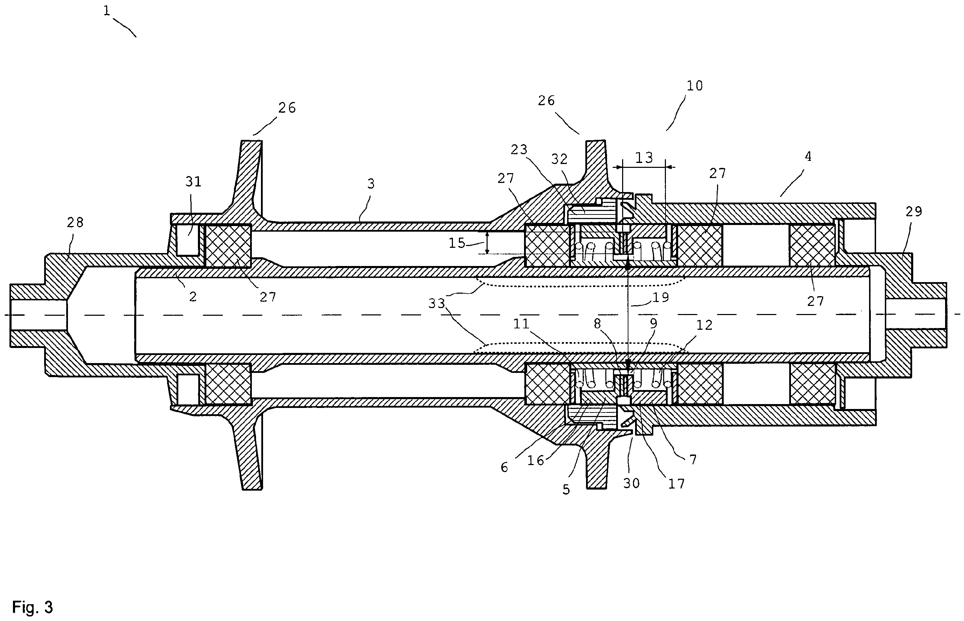

Figur 3 zeigt einen stark schematisierten Querschnitt durch eine erfindungsgemäße Nabe 1 für ein Fahrrad 50 gemäß Figur 1 oder Figur 2.

Die erfindungsgemäße Nabe 1 verfügt über eine hier hohl ausgebildete Nabenachse 2 und einen hier einteilig ausgebildeten Nabenkörper 3, der über zwei Nabenflansche 26 zur Befestigung der Speichen verfügt. In anderen Ausgestaltungen kann der Nabenkörper auch mehrteilig ausgebildet sein und beispielsweise über eine Nabenhülse und dran befestigte separate Nabenflasche 26 verfügen.

Der Rotor 4 dient zur Aufnahme wenigstens eines Ritzels und insbesondere zur Aufnahme eines Ritzelpaketes mit mehreren Ritzeln. Durch Auswählen eines entsprechenden Ritzels kann die Antriebsübersetzung wunschgemäß verändert werden.

Ein Zahnscheibenfreilauf 5 ist vorgesehen, um bei Aufbringung von Antriebsdrehmoment das Drehmoment auf den Nabenkörper zu übertragen, während beispielsweise bei Bergabfahrten oder dergleichen eine Entkoppelung der Drehbewegungen des Nabenkörpers 3 und des Rotors 4 erfolgen kann.

Der Zahnscheibenfreilauf 5 verfügt im dargestellten Ausführungsbeispiel über zwei Eingriffskomponenten 6 und 7, die jeweils über eine Axialverzahnung 8, 9 verfügen, die in der in Figur 3 dargestellten Eingriffsstellung 10 miteinander im Eingriff sind.

Die beiden Eingriffskomponenten 6, 7 sind in diesem Ausführungsbeispiel jeweils als Zahnscheibe 16 bzw. 17 ausgebildet und weisen vorzugsweise einen identischen Aufbau auf.

Der Querschnitt jeder Zahnscheibe ist insgesamt etwa U-förmig, wobei sich die Zahnscheibe 16 bzw. 17 geometrisch durch Zusammensetzung einer Lochscheibe und einer Hülse ergibt. Die Axialverzahnung 8 ist an der Lochscheibe vorgesehen.

Die als Zahnscheibe 16 ausgeführte Eingriffskomponente 6 wird hier im Ausführungsbeispiel in dem als Gewindering 32 ausgeführten Nabenbauteil 23 axial verschiebbar aber drehfest aufgenommen. Dazu weist die Zahnscheibe 16 eine Außenverzahnung auf, die in eine entsprechende Innenverzahnung des Gewinderings 32 eingreift, sodass eine axiale Bewegung möglich ist, während eine relative Drehbewegung der Zahnscheibe 16 zu dem Gewindering 32 nicht möglich ist.

In anderen Ausgestaltungen ist es auch möglich, den Gewindering 32 wegzulassen und eine entsprechend unrunde Innenkontur in dem Nabenkörper 3 direkt vorzusehen. Dadurch könnte das Bauteil 23 eingespart werden.

Ein Vorteil des separaten Gewinderings 32 ist aber auf der anderen Seite, dass der Gewindering 32 aus einem härteren und somit meist schwereren Material als der Nabenkörper 3 gefertigt werden kann, ohne das Gesamtgewicht stark zu erhöhen. Außerdem kann der Gewindering 32 bei Verschleiß oder Bedarf ausgetauscht werden kann.

Hier im Ausführungsbeispiel dient der Gewindering 32 auch zur axialen Fixierung des Lagers 27, welches auf der anderen Seite an einem Absatz der Nabenachse 2 anliegt. Es ist aber auch möglich, das Lager 27 beispielsweise über einen Presssitz zu befestigen oder über sonstige Befestigungsmittel zu fixieren.

Die andere Eingriffskomponente 7 ist in diesem Ausführungsbeispiel als Zahnscheibe 17 ausgeführt und verfügt ebenfalls über eine unrunde Außenkontur und insbesondere eine Außenverzahnung, die in einer entsprechenden Innenverzahnung des Rotors 4 drehfest aber axial verschiebbar angeordnet ist.

Beide Zahnscheiben 16, 17 werden jeweils durch eine als Spiralfeder ausgeführte Vorbelastungseinrichtung 11 bzw. 12 in axialer Richtung aufeinander zu gedrückt, um die Axialverzahnungen 8 und 9 in Eingriff miteinander zu bringen. Dadurch wird in Antriebsrichtung eine Drehmomentübertragung von dem Rotor 4 auf das Nabengehäuse 3 ermöglicht, während in umgekehrter Drehrichtung die Zähne der Zahnscheiben 8, 9 gegen die Kraft der Vorbelastungseinrichtungen 11, 12 auseinander gedrückt werden und auf ihren Zahnflanken aneinander vorbei gleiten.

Zur Dichtung ist zwischen dem Rotor 4 und dem Nabengehäuse 3 eine Dichtung 30 vorgesehen, die hier eine berührungslose Labyrinthdichtung und/oder auch eine berührende Elastomerdichtung umfassen kann, um Feuchtigkeit und Staub und dergleichen von dem Zahnscheibenfreilauf 5 fernzuhalten.

An einem Ende ist ein Adapterring 28 vorgesehen und an dem anderen Ende ein Adapterring 29, die auf die Nabenachse 2 aufgeschoben sind und die an ihren äußeren Enden Bereiche aufweisen, die dafür geeignet sind, in die Ausfallenden einer Fahrradgabel oder eines Fahrradrahmens eingeschoben zu werden. Zur Befestigung dient beispielsweise ein Schnellspanner, der in Figur 3 nicht abgebildet ist.

Der Adapterring 28 weist hier eine Doppelflanschdichtung 31 auf, die als doppelte Labyrinthdichtung wirkt und eine hohe Effektivität aufweist. In analoger Weise kann auch der Adapterring 29 ausgebildet sein.

Zur Lagerung des Rotors sind zwei Lager 27 vorgesehen.

Ein lichter Innendurchmesser 19 der Zahnscheiben 16, 17 ist hier nicht größer als die dreifache axiale Breite 13 der Zahnscheibe 16. Dadurch wird ein sicherer Sitz der Zahnscheibe 16 in dem Gewindering 32 gewährleistet und ein mögliches Verkanten beim hin- und herbewegen der Zahnscheibe 16 verhindert. Dadurch wird die Zuverlässigkeit des Zahnscheibenfreilaufs nochmals gesteigert. Es hat sich herausgestellt, dass die Zahnscheibe 16 bei größeren axialen Breiten zuverlässiger funktioniert. Insbesondere bei großen Außendurchmessern führt eine größere axiale Breite zu einem sicheren Betrieb.

Zur Versteifung kann eine hier gestrichelt dargestellte radiale Verdickung 33 vorgesehen sein. Die Verdickung 33 kann an der Nabenachse 2 nach innen ausgebildet sein. Es ist auch möglich, dass die Verdickung 33 radial nach außen vorgesehen ist.

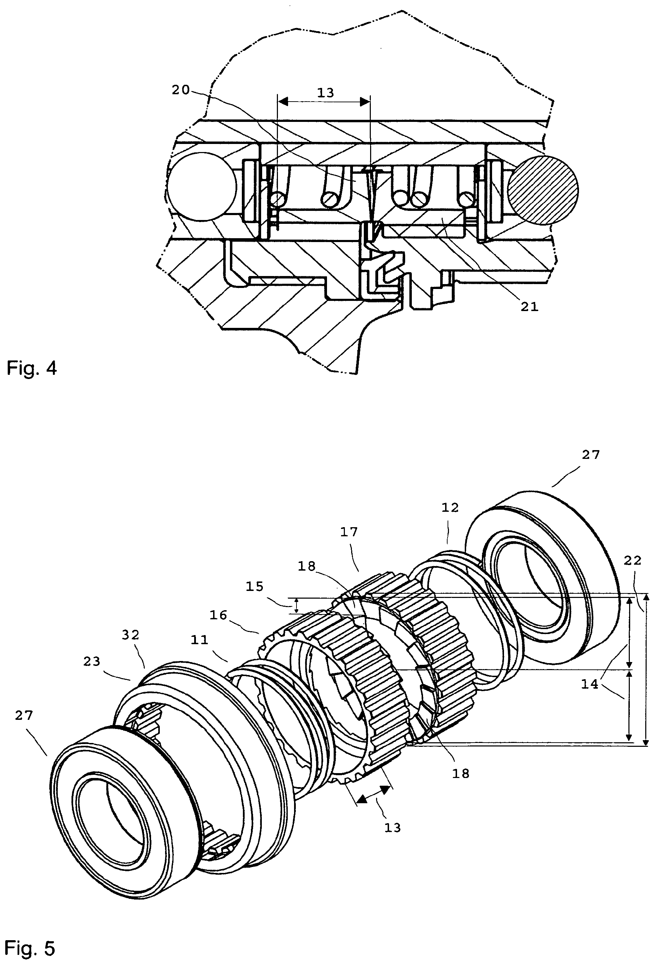

In den Figuren 4 und 5 ist der Zahnscheibenfreilauf 5 in einem vergrößerten Querschnitt bzw. in einer Explosionsdarstellung vergrößert dargestellt, um die Einzelheiten besser darstellen zu können.

Dabei zeigt Figur 4, dass die axiale Breite 13 der Zahnscheibe 16 mehr als doppelt so groß ist, wie die radiale Erstreckung 15 der Zähne 18 der Zahnscheiben 16 bzw. 17. Erstaunlicherweise hat sich gezeigt, dass bei einer wenigstens doppelt so großen axialen Breite 13 der Zahnscheibe 16 sich ein noch zuverlässiger Betrieb des Zahnscheibenfreilaufs 5 ergibt.

An dem radialen Schenkel 20 sind die Zähne 18 der Axialverzahnungen 8, 9 vorgesehen. Dabei ist die radiale Erstreckung 15 weniger als halb so groß wie die axiale Breite 13 der Zahnscheibe 16 bzw. 17.

Insbesondere ist, wie die Explosionsdarstellung gemäß Figur 5 zeigt, der Außenradius 14 der Axialverzahnung 8 und 9 nicht größer als die doppelte axiale Breite 13 der Zahnscheiben 16, 17. Umgekehrt gesagt ist die axiale Breite 13 der Zahnscheiben 16, 17 wenigstens so groß wie der halbe Außenradius 14 der Axialverzahnung 8 bzw. 9. Dadurch wird ein Breitenverhältnis definiert, welches besonders zuverlässige Axialverschiebungen der Zahnscheiben 16 bzw. 17 in dem Rotor 4 bzw. Nabengehäuse 3 erlaubt. Ein Verkanten der Zahnscheiben beim axialen Verschieben wird praktisch vollständig ausgeschlossen.

Bei den typischen Abmessungen der Naben 1 von Fahrrädern hat sich eine axiale Breite 13 der Zahnscheibe 16 bzw. 17 von 6,5 mm oder mehr als vorteilhaft herausgestellt, insbesondere, wenn die Zahnscheiben 16 bzw. 17 mit größeren Außendurchmessern versehen werden.

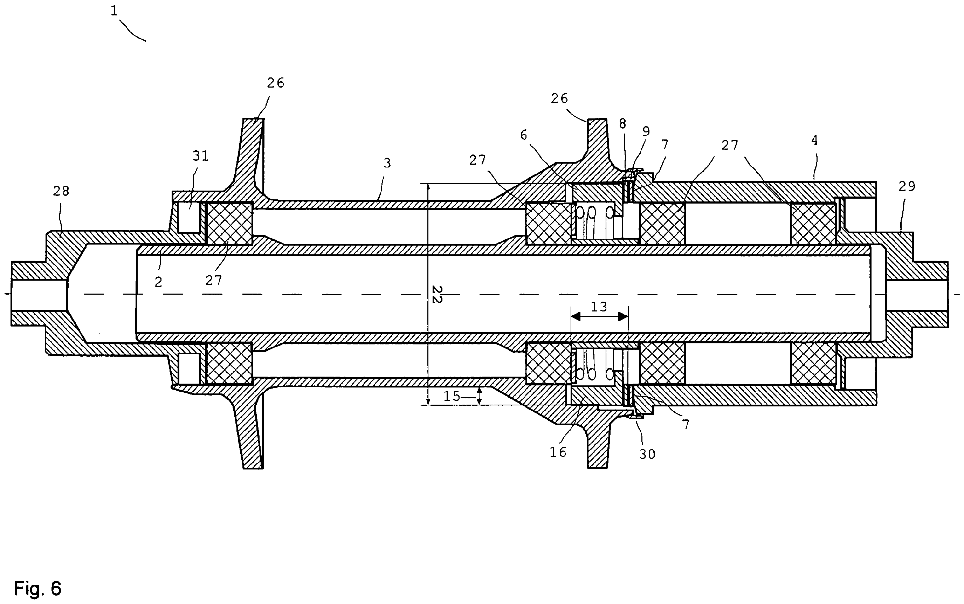

Figur 6 zweigt ein anderes Ausführungsbeispiel einer erfindungsgemäßen Nabe 1, die im Wesentlichen gleich aufgebaut ist wie die erfindungsgemäße Nabe 1 gemäß Figur 3. Deshalb werden gleiche oder ähnliche Teile auch mit den gleichen Bezugszeichen versehen.

Die Nabe 1 im Ausführungsbeispiel nach Figur 6 verfügt über eine Nabenachse 2 und einen Nabenkörper 3 der mit Nabenflanschen 26 ausgerüstet ist.

Der Nabenkörper 3 ist über zwei Lager 27 drehbar gegenüber der Nabenachse 2 gelagert. Der Rotor 4 ist ebenfalls über zwei Lager 27 gegenüber der Nabenachse drehbar gelagert.

Zwischen dem Nabenkörper 3 und dem Rotor 4 ist ein Zahnscheibenfreilauf 5 vorgesehen, der wiederum Eingriffskomponenten 6 und 7 umfasst. Eine berührungslose und/oder berührende Dichtung kann zwischen dem Rotor 4 und dem Nabengehäuse 3 vorgesehen sein.

In diesem Ausführungsbeispiel sind die Eingriffskomponenten 6 und 7 unterschiedlich ausgebildet. Während die Eingriffskomponente 6 als Zahnscheibe 16 ausgeführt ist, ist die Eingriffskomponente 7 als Stirnverzahnung an einem axialen Ende des Rotors 4 ausgebildet. Dadurch steht das axiale Ende des Rotors 4 mit der daran vorgesehenen Axialverzahnung 9 in Eingriff mit der Axialverzahnung 8 der Zahnscheibe 16.

Die Zahnscheibe 16 wird in axialer Richtung durch eine hier als Spiralfeder ausgebildete Vorbelastungseinrichtung 11 in Richtung auf den Rotor 4 vorbelastet, sodass die Zähne 18 der Axialverzahnungen 8 und 9 in der Regel im Eingriff miteinander stehen.

Hier im Ausführungsbeispiel sind die zur Lagerung des Nabenkörpers 3 benachbart zu der Zahnscheibe 16 vorgesehenen Lager 27 beispielsweise mit einer Presspassung eingefügt.

Ein Gewindering 32 zur Aufnahme der Zahnscheibe 16 ist in diesem Ausführungsbeispiel nicht vorgesehen, kann aber in analoger Weise zum Ausführungsbeispiel gemäß Figur 3 in dem Nabenkörper 3 vorgesehen sein.

Dadurch, dass die Eingriffskomponente 7 mit der Axialverzahnung 9 als Stirnverzahnung 4 an dem Rotor 4 vorgesehen ist, weist dieser einen größeren Außendurchmesser auf als im Ausführungsbeispiel gemäß Figur 3. Dementsprechend wird auch eine vergrößerte axiale Breite 13 der Zahnscheibe 16 vorgesehen. Die Breite der Zahnscheibe 16 beträgt hier mindestens 6,5 mm und insbesondere wenigstens ein Drittel des Außendurchmessers der Axialverzahnung 9 an dem Rotor 4.

Auch die axiale Breite 13 ist wenigstens doppelt so groß wie die radiale Erstreckung 15 der Zähne 18 der Axialverzahnungen 8 bzw. 9.

Insgesamt stellt die Erfindung eine vorteilhafte Nabe 1 zur Verfügung, welche auch bei vergrößerten Durchmessern einen sehr zuverlässigen Betrieb mit einem Zahnscheibenfreilauf ermöglicht.

### Bezugszeichenliste:

| | | | |
|---|---|---|---|
| 1 | Nabe | 24 | Nabenbauteil |
| 2 | Nabenachse | 25 | Außenradius |
| 3 | Nabenkörper | 26 | Nabenflansch |
| 4 | Rotor | 27 | Lager |
| 5 | Zahnscheibenfreilauf | 28 | Adapterring |
| 6 | Eingriffskomponente | 29 | Adapterring |
| 7 | Eingriffskomponenten | 30 | Dichtung |
| 8 | Axialverzahnung | 31 | Doppelflanschdichtung |
| 9 | Axialverzahnung | 32 | Nabenbauteil, Gewindering |
| 10 | Eingriffsstellung | 33 | Verdickung |
| 11 | Vorbelastungseinrichtung | 50 | Fahrrad |
| 12 | Vorbelastungseinrichtung | 51 | Vorderrad |
| 13 | axiale Breite | 52 | Hinterrad |
| 14 | äußerer Radius | 53 | Rahmen |
| 15 | radiale Erstreckung | 54 | Gabel |
| 16 | Zahnscheibe | 55 | Hinterraddämpfer |
| 17 | Zahnscheibe | 56 | Lenker |
| 18 | Zahn | 57 | Sattel |
| 19 | Innendurchmesser | 58 | Batterie |
| 20 | radialer Schenkel | 59 | Speiche |
| 21 | axialer Schenkel | 60 | Reifen |
| 22 | Außendurchmesser | 61 | Felge |
| 23 | Nabenbauteil | 100 | Fahrzeug |

## Patentansprüche

1. Nabe (1) für wenigstens teilweise muskelbetriebene Fahrzeuge (100) und insbesondere Zweiräder (50) mit einer Nabenachse (2) und einem Nabenkörper (3) und einem Rotor (4) und mit einem Zahnscheibenfreilauf (5), welcher zwei miteinander zusammenwirkende Eingriffskomponenten (6, 7) mit jeweils wenigstens einer Axialverzahnung (8, 9) aufweist,
wobei die Eingriffskomponenten (6, 7) über wenigstens eine Vorbelastungseinrichtung (11, 12) in Eingriffsstellung (10) vorbelastet werden,
wobei die eine Eingriffskomponente (6) axial verschiebbar und in Antriebsrichtung drehfest mit dem Nabenkörper (3) gekoppelt ist und wobei die andere Eingriffskomponente (7) drehfest an dem Rotor (4) vorgesehen ist, um in der Eingriffsstellung (10) der beiden Eingriffskomponente (6, 7) eine Drehbewegung von dem Rotor (4) auf den Nabenkörper (3) zu übertragen,
**dadurch gekennzeichnet,**
**dass** wenigstens eine der beiden Eingriffskomponenten (6, 7) als Zahnscheibe (16, 17) ausgebildet ist und wobei die Vorbelastungseinrichtung (11) wenigstens teilweise im Inneren der Zahnscheibe (16) angeordnet ist,
und wobei die Zahnscheibe (16) in Antriebsrichtung drehfest mit dem Nabenkörper (3) gekoppelt ist und mittelbar oder unmittelbar an oder in dem Nabenkörper (3) axial verschiebbar aufgenommen und mit der Axialverzahnung (8) versehen ist und eine axiale Breite (13) aufweist, die wenigstens so groß ist wie der halbe Außenradius (14) der Axialverzahnung (8).

2. Nabe (1) nach Anspruch 1, wobei die Zahnscheibe (16, 17) eine axiale Breite (13) größer als 6,5 mm aufweist.

3. Nabe (1) nach wenigstens einem der vorhergehenden Ansprüche, dass die axiale Breite (13) wenigstens doppelt so groß ist wie eine radiale Erstreckung (15) der Zähne (18) der Axialverzahnung (8, 9).

4. Nabe nach wenigstens einem der vorhergehenden Ansprüche, wobei eine doppelte axiale Breite (13) der Zahnscheibe (16, 17) wenigstens so groß wie ein Außenradius (25) der Zahnscheibe (16, 17) ist.

5. Nabe nach wenigstens einem der vorhergehenden Ansprüche, wobei das Verhältnis eines lichten Innendurchmessers (19) der Zahnscheibe (16, 17) zu der axialen Breite (13) der Zahnscheibe (16, 17) kleiner als drei ist.

6. Nabe nach wenigstens einem der vorhergehenden Ansprüche, wobei ein Querschnitt der Zahnscheibe (16, 17) U- oder L-förmig gestaltet ist und wobei an dem radialen Schenkel (20) die Axialverzahnung (8, 9) vorgesehen ist.

7. Nabe nach wenigstens einem der vorhergehenden Ansprüche, wobei die Zahnscheibe (16, 17) eine unrunde Außenkontur aufweist und in einer entsprechend unrunden Innenkontur eines Nabenbauteils (23, 24) drehfest und axial verschiebbar aufgenommen ist.

8. Nabe nach dem vorhergehenden Anspruch, wobei die Zahnscheibe (16, 17) eine Radialverzahnung aufweist.

9. Nabe nach wenigstens einem der vorhergehenden Ansprüche, wobei die Vorbelastungseinrichtung (11, 12) in axialer Richtung gegen den radialen Schenkel (20) der Zahnscheibe 16, 17) drückt.

10. Nabe nach wenigstens einem der vorhergehenden Ansprüche, wobei die Axialverzahnung einer Eingriffskomponente (7) als Stirnverzahnung an dem Rotor (4) vorgesehen ist.

11. Nabe nach wenigstens einem der vorhergehenden Ansprüche, wobei der Außenradius der Axialverzahnung wenigstens 14 mm beträgt.

12. Nabe nach wenigstens einem der vorhergehenden Ansprüche, wobei die axiale Breite der Zahnscheibe wenigstens 7 mm beträgt.

13. Nabe (1) nach mindestens einem der vorhergehenden Ansprüche, wobei wenigstens eine Zahnscheibe aus Stahl und der Nabenkörper wenigstens teilweise aus wenigstens einem leichten Material wie Leichtmetall oder Faserverbundwerkstoff besteht.

## Claims

1. A hub (1) for at least partially muscle-powered vehicles (100) and in particular two-wheeled vehicles (50) having a hub axle (2) and a hub body (3) and a rotor (4), and with a toothed disk freewheel (5) comprising a pair of interacting engagement components (6, 7), each comprising at least one axial toothing (8, 9),
the engagement components (6, 7) being biased in the engagement position (10) via at least one biasing device (11, 12), wherein one of the engagement components (6) is coupled with the hub body (3) to be axially displaceable and non-rotatable in the driving direction, and wherein the other of the engagement components (7) is provided non-rotatable at the rotor (4) for transmitting a rotary motion from the rotor (4) to the hub body (3) in the engagement position (10) of the two engagement components (6, 7),
**characterized in**
**that** at least one of the two engagement components (6, 7) is configured as a toothed disk (16, 17), and wherein the biasing device (11) is at least partially disposed in the interior of the toothed disk (16),
and wherein the toothed disk (16) is coupled with the hub body (3) non-rotatably in the driving direction and is indirectly or directly received axially displaceable at or in the hub body (3), and is provided with the axial toothing (8) and comprises an axial width (13) that is at least the same size as half the outer radius (14) of the axial toothing (8).

2. The hub (1) according to claim 1, wherein the toothed disk (16, 17) has an axial width (13) of more than 6.5 mm.

3. The hub (1) according to at least one of the preceding claims, wherein the axial width (13) is at least twice the size as is a radial extension (15) of the teeth (18) of the axial toothing (8, 9).

4. The hub according to at least one of the preceding claims,
wherein double an axial width (13) of the toothed disk (16, 17) is at least the same size as an outer radius (25) of the toothed disk (16, 17).

5. The hub according to at least one of the preceding claims,
wherein the ratio of a clear inner diameter (19) of the toothed disk (16, 17) to the axial width (13) of the toothed disk (16, 17) is less than three.

6. The hub according to at least one of the preceding claims,
wherein a cross-section of the toothed disk (16, 17) is configured U- or L-shaped, and wherein the radial leg (20) is provided with the axial toothing (8, 9).

7. The hub according to at least one of the preceding claims,
wherein the toothed disk (16, 17) has a non-round outer contour and is received in a corresponding, non-round inner contour of a hub component (23, 24) to be non-rotatable and axially displaceable.

8. The hub according to the preceding claim, wherein the toothed disk (16, 17) comprises a radial toothing.

9. The hub according to at least one of the preceding claims,
wherein the biasing device (11, 12) presses against the radial leg (20) of the toothed disk (16, 17) in the axial direction.

10. The hub according to at least one of the preceding claims,
wherein the axial toothing of an engagement component (7) is provided as an end toothing at the rotor (4).

11. The hub according to at least one of the preceding claims,
wherein the outer radius of the axial toothing is at least 14 mm.

12. The hub according to at least one of the preceding claims,
wherein the axial width of the toothed disk is at least 7 mm.

13. The hub (1) according to at least one of the preceding claims, wherein at least one toothed disk consists of steel, and the hub body consists at least in part of at least one lightweight material such as light metal or a fibrous composite material.

## Revendications

1. Moyeu (1) pour véhicules (100) au moins partiellement entraînés par force musculaire, et notamment deux roues (50) dotés d'un axe de moyeu (2), d'un corps de moyeu (3), d'un rotor (4) et d'une roue libre à disque cranté (5) qui présente deux composants d'engagement (6, 7) coopérant entre eux et comportant chacun au moins une denture axiale (8, 9),
lesdits composants d'engagement (6, 7) étant préchargés en position d'engagement (10) par au moins un dispositif de précharge (11, 12),
l'un desdits composants d'engagement (6) pouvant être déplacé axialement et étant couplé solidaire en rotation au corps de moyeu (3) dans le sens d'entraînement, et l'autre composant d'engagement (7) étant prévu solidaire en rotation sur le rotor (4), afin de transmettre un mouvement de rotation du rotor (4) au corps de moyeu (3) dans la position d'engagement (10) des deux composants d'engagement (6, 7),
**caractérisé en ce**
**qu'**au moins un des deux composants d'engagement (6, 7) est réalisé sous la forme d'un disque cranté (16, 17), et le dispositif de précharge (11) est agencé au moins partiellement à l'intérieur du disque cranté (16),
et ledit disque cranté (16) étant couplé de manière solidaire en rotation au corps de moyeu (3) dans le sens d'entraînement et étant reçu de manière à pouvoir être déplacé axialement directement ou indirectement sur ou dans le corps de moyeu (3) et étant pourvu de la cranture axiale (8) et présentant une largeur axiale (13) qui est au moins aussi grande que la moitié du rayon extérieur (14) de la cranture axiale (8).

2. Moyeu (1) selon la revendication 1, le disque cranté (16, 17) présentant une largeur axiale (13) supérieure à 6,5 mm.

3. Moyeu (1) selon au moins l'une quelconque des revendications précédentes, que la largeur axiale (13) est au moins deux fois supérieure à une étendue radiale (15) des dents (18) de la cranture axiale (8, 9).

4. Moyeu selon au moins l'une quelconque des revendications précédentes, une double largeur axiale (13) du disque cranté (16, 17) étant au moins égale à un rayon extérieur (25) du disque cranté (16, 17).

5. Moyeu selon au moins l'une quelconque des revendications précédentes, le rapport d'un diamètre intérieur libre (19) du disque cranté (16, 17) sur la largeur axiale (13) du disque cranté (16, 17) étant inférieur à trois.

6. Moyeu selon au moins l'une quelconque des revendications précédentes, une section droite du disque cranté (16, 17) étant sous forme de U ou de L, et la cranture axiale (8, 9) étant prévue sur l'aile radiale (20).

7. Moyeu selon au moins l'une quelconque des revendications précédentes, le disque cranté (16, 17) présentant un contour extérieur non rond et étant logé dans un contour intérieur non rond correspondant d'un composant de moyeu (23, 24) de manière à être solidaire en rotation et à pouvoir se déplacer axialement.

8. Moyeu selon la revendication précédente, le disque cranté (16, 17) présentant une cranture radiale.

9. Moyeu selon au moins l'une quelconque des revendications précédentes, le dispositif de précharge (11, 12) appuyant dans le sens axial contre l'aile radiale (20) du disque cranté (16, 17).

10. Moyeu selon au moins l'une quelconque des revendications précédentes, la cranture axiale d'un composant d'engagement (7) étant prévu sous forme de cranture frontale sur le rotor (4).

11. Moyeu selon au moins l'une quelconque des revendications précédentes, le rayon extérieur de la cranture axiale étant d'au moins 14 mm.

12. Moyeu selon au moins l'une quelconque des revendications précédentes, la largeur axiale du disque cranté étant d'au moins 7 mm.

13. Moyeu (1) selon au moins l'une quelconque des revendications précédentes, au moins un disque cranté étant en acier et le corps de moyeu étant au moins partiellement en matériau léger tel qu'un métal léger ou un matériau composite à fibres.
